# EUROPÄISCHE PATENTSCHRIFT

(11) **EP 2 275 785 B1**
(45) Veröffentlichungstag und Bekanntmachung des Hinweises auf die Patenterteilung: **19.10.2016**
(21) Anmeldenummer: 10007186.9
(22) Anmeldetag: 12.07.2010
(51) Int. Cl.: G01F 1/68, G01F 15/00, F15D 1/00, G01F 1/684

(54) **Modular aufgebaute Einheit**
Modular unit
Unité montée de manière modulaire

(30) Priorität: 17.07.2009 DE 202009009760 U
(43) Veröffentlichungstag der Anmeldung: 19.01.2011
(73) Patentinhaber: Bürkert Werke GmbH, 74653 Ingelfingen (DE)
(72) Erfinder: Chalupa, Stefan, 74214 Schöntal (DE); Gunnesch, Johann, 75638 Waldenburg (DE); Kabisch, Gunter, Dr., 74676 Niedernhall (DE); Schuler, Jan, 74676 Niedernhall (DE)
(74) Vertreter: Prinz & Partner mbB

(56) Entgegenhaltungen:
- EP-A1- 0 458 998
- EP-A2- 0 831 303
- DE-A1- 19 705 660
- DE-U1- 20 208 716
- US-A- 3 831 860
- US-A- 4 781 536
- US-A- 5 816 497
- US-A1- 2004 123 672

## Beschreibung

Die Erfindung betrifft eine modular aufgebaute Einheit aus einem Strömungswiderstandselement und einer daran angrenzenden Blende, vorzugsweise zur Verwendung im Haupt-Strömungskanal eines thermischen Massendurchflussmess- oder Regelgeräts.

In Massendurchflussmess- und Regelgeräten werden Strömungswiderstandselemente zur Erzeugung von möglichst laminarer Strömung verwendet. Diese erzeugen einen geringen Druckabfall, der einen Durchfluss über einen parallel zum Hauptkanal angeordneten Bypasskanal bewirkt, in welchem der Durchflusssensor sitzt. Bei laminarer Strömung besteht ein linearer Zusammenhang zwischen dem Durchfluss im Bypasskanal und dem vom Strömungswiderstand erzeugten Druckabfall.

In Abhängigkeit von der gewünschten Durchflussmenge pro Zeiteinheit werden Strömungswiderstandelemente, mit unterschiedlichen Öffnungsdurchmessern benötigt: für hohe Durchflüsse ist ein geringer Strömungswiderstand erforderlich, für kleine Durchflüsse dagegen ein hoher Strömungswiderstand. Deshalb wird gemäß dem Stand der Technik für ein Massendurchflussmess- und Regelgerät ein ganzes Sortiment an Strömungswiderstandselementen bereitgestellt, was aufwändig und teuer ist.

Aus der DE 202 08 716 U1 ist eine Durchfluss-Messeinrichtung bekannt, bei der in einen Hauptkanal eine sogenanntes Laminar-Flowelement eingesetzt ist. In einem Bypass zum Flowelement ist eine Massenstrom-Sensoreinrichtung untergebracht. Anstatt des Laminar-Flowelements kann eine Blende verwendet werden.

Die US 4 791 536 A beschreibt eine Durchfluss-Messeinrichtung mit Bypass, bei der im Hauptkanal voneinander beabstandete, dünne Platten mit je drei Öffnungen vorhanden sind. Die Platten sind fest an der Kanalwand angebracht. Eine weitere, von den übrigen beabstandete Platte ist austauschbar ausgeführt, um sie durch eine Platte mit anderem Strömungsquerschnitt zu ersetzen.

Aus der gattungsgemäßen US 3,831,860 ist ein Durchfluss-Regelgerät bekannt, das ein Strömungswiderstandselement mit mehreren parallelen Kanälen und eine Blende aufweist, die eine zentrale Öffnung hat.

Die US 5,816,497 A beschreibt einen Diffusor, der einen Strömungswiderstand mit mehreren parallelen Kanälen und eine Blende aufweist, die eine zentrale Öffnung hat.

Eine erfindungsgemäße Lösung sieht dagegen gemäß Anspruch 1 ein Strömungswiderstandselement, aufgebaut aus einer Vielzahl paralleler Kanäle, mit großem Öffnungsquerschnitt vor, das mit Blenden unterschiedlicher Öffnungsdurchmesser zusammenwirkt, wobei die ausgewählte Blende an das Strömungswiderstandselement angrenzt. Dadurch ist der gewünschte Durchflussbereich bei Verwendung nur eines einzigen Strömungswiderstandselementes stufenlos einstellbar. Die Kosten werden erheblich gesenkt, weil sich Blenden mit unterschiedlichen Bohrungsdurchmessern einfach und günstig herstellen lassen.

Strömungswiderstandselemente bestehen üblicherweise aus einer Vielzahl paralleler Kanäle, zwischen denen sich Trennwände befinden. Sie können einstückig, beispielsweise aus einem Zylinderabschnitt durch Einbringen von Bohrungen gefertigt werden. Bei diesen Verfahren ist fertigungsbedingt die mögliche Anzahl der Kanäle begrenzt, und es ist schwierig, kleine Toleranzen einzuhalten. Bekannt ist auch der Aufbau aus mehreren hintereinanderliegenden Scheiben, wobei in den einzelnen Scheiben angebrachte Nuten im Scheibenstapel Kanäle bilden.

An den Ein- und Austrittsöffnungen der Kanäle können, bedingt durch eine plötzliche Querschnittsverengung bzw. -erweiterung, unerwünscht Turbulenzen auftreten. Deshalb stellt die Erfindung ein Strömungswiderstandselement, aufgebaut aus einer Vielzahl paralleler Kanäle, zur Verfügung, das sehr kleine Wandstärken der Wände aufweist, welche die Kanäle begrenzen. Die Wandstärken liegen typischerweise im Bereich von 0,5 mm bis 0,05 mm.

Das erfindungsgemäße Strömungswiderstandselement wird vorzugsweise durch Photopolymerisation aus einem Kunststoff durch schichtweises Wachsen über einer entsprechenden Maske hergestellt. Das hat den Vorteil, dass die gewünschten geringen Wandstärken realisiert, sehr niedrige Toleranzen eingehalten und nahezu beliebige Kanalgeometrien umgesetzt werden können.

Als vorteilhafte Variante hat sich ein Strömungswiderstandselement erwiesen, welches annähernd trapezförmige Kanalquerschnitte aufweist.

Die Blende kann vor oder hinter dem Strömungswiderstandselement im Haupt-Strömungskanal eines thermischen Massendurchflussmess- oder Regelgeräts angeordnet sein, was den Vorteil einer einfachen und somit für Fehler unanfälligen Montage hat.

Weitere Vorteile und Ausgestaltungen der Erfindung werden anhand der beigefügten Figuren beschrieben. Hierbei zeigen:
**Fig. 1** Schnittbild einer modular aufgebauten Einheit aus Strömungswiderstandselement und Blende;
**Fig. 2** Schnittbild eines Strömungswiderstandselements mit geringer Kanalwandstärke; und
**Fig. 3** Schnittbild wie in **Fig. 2** mit Blende.

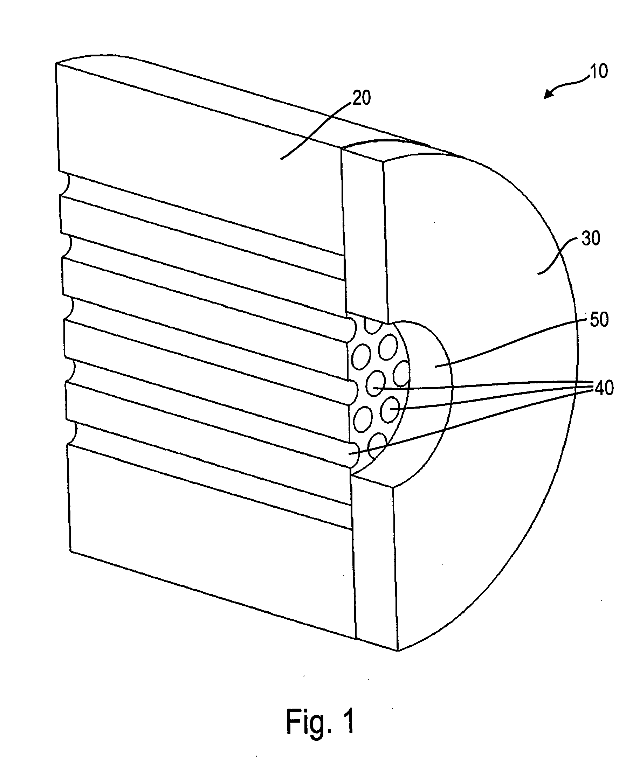

In **Fig. 1** ist ein Schnittbild einer modular aufgebauten Einheit 10 aus einem zylinderförmigen Strömungswiderstandselement 20 und einer daran angrenzenden Blende 30 dargestellt. Das Strömungswiderstandselement 20 weist eine Vielzahl paralleler Kanäle 40 auf, die das Strömungswiderstandselement 20 von einer kreisförmigen Endfläche zur anderen durchragen. Die Blende 30 ist als Scheibe ausgestaltet, die eine Öffnung 50 aufweist und die eine gewisse Anzahl Kanäle 40 abdeckt und eine gewisse Anzahl Kanäle 40 des Strömungswiderstandselements 20 freigibt. Je nach gewünschter Durchflussmenge wird das Strömungswiderstandselement 20 mit einer Blende 30 kombiniert, wobei die Blende 30 einen entsprechend kleineren oder größeren Öffnungsdurchmesser aufweist.

Das Strömungswiderstandselement 20 in **Fig. 1** weist eine Anordnung paralleler Bohrungen mit kreisförmigem Querschnitt auf. Diese Art Strömungswiderstandselement ist besonders geeignet, wenn niedrige Durchflussraten erwünscht sind.

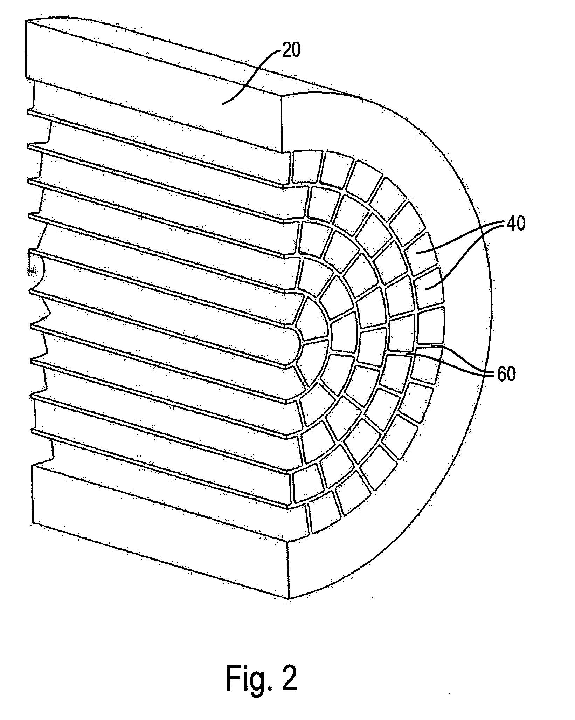

**Fig. 2** zeigt ein Strömungswiderstandselement 20 mit parallelen, aneinander angrenzenden Kanälen 40, wobei die Wandstärke der Wände 60 zwischen benachbarten Kanälen 40 zwischen 0,5 mm und 0,05 mm beträgt. Dieses Strömungswiderstandselement 20 weist einen großen Öffnungsquerschnitt auf und ist besonders für hohe Durchflussraten geeignet.

Das Strömungswiderstandselement 20 wird vorzugsweise durch Photopolymerisation aus einem Kunststoff durch schichtweises Wachsen über einer entsprechenden Maske hergestellt. Das hat den Vorteil, dass die gewünschten geringen Wandstärken realisiert, sehr niedrige Toleranzen eingehalten und nahezu beliebige Kanalgeometrien bei vergleichsweise geringen Kosten umgesetzt werden können.

Der Kanalquerschnitt der Kanäle 40 ist annähernd trapezförmig. Es sind aber auch andere Geometrien denkbar.

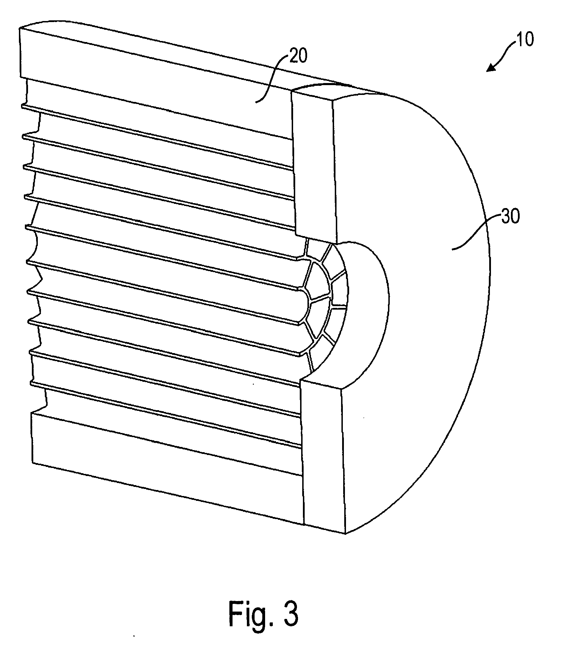

Wie in **Fig. 3** dargestellt, wird eine Einheit 10 auch aus dem Strömungswiderstandselement 20 gemäß **Fig. 2** und der Blende 30 modular aufgebaut, wobei es nicht auf die Reihenfolge der beiden Komponenten ankommt, wenn diese im Haupt-Strömungskanal eines thermischen Massendurchflussmess- oder Regelgeräts eingebaut werden.

## Patentansprüche

1. Modular aufgebaute Einheit (10) aus einem Strömungswiderstandselement (20), das aus einer Vielzahl paralleler Kanäle (40) aufgebaut ist, und einer daran angrenzenden Blende (30) zur Verwendung im Haupt-Strömungskanal eines thermischen Massendurchflussmess- oder Regelgeräts, wobei das Strömungswiderstandselement (20) kombinierbar ist mit verschiedenen Blenden (30), die sich in ihrem Öffnungsdurchmesser unterscheiden, **dadurch gekennzeichnet, dass** die Blende (30) in Strömungsrichtung unmittelbar vor oder hinter dem Strömungswiderstandselement (20) angeordnet ist und an das Strömungswiderstandselement (20) angrenzt, wobei die Blende (30) als Scheibe ausgestaltet ist, die eine Öffnung (50) aufweist, und wobei die Scheibe eine gewisse Anzahl der parallelen Kanäle (40) abdeckt und eine gewisse Anzahl der parallelen Kanäle (40) freigibt.

2. Modular aufgebaute Einheit (10) nach Anspruch 1, wobei das Strömungswiderstandselement (20) parallele und aneinandergrenzende Kanäle (40) aufweist, die von Wänden (60) begrenzt werden, deren Wandstärke 0,5 mm bis 0,05 mm beträgt.

3. Modular aufgebaute Einheit (10) nach Anspruch 1 und 2, wobei das Strömungswiderstandselement (20) durch Photopolymerisation aus einem Kunststoff durch schichtweises Wachsen über einer entsprechenden Maske hergestellt ist.

4. Modular aufgebaute Einheit (10) nach Anspruch 3, wobei das Strömungswiderstandselement (20) Kanäle (40) aufweist, deren Querschnitt vorzugsweise annähernd trapezförmig ist.

5. Modular aufgebaute Einheit (10) nach einem der vorhergehenden Ansprüche, wobei ein einziges Strömungswiderstandselement (20) mit großem Öffnungsquerschnitt zusammenwirkt mit jeweils einer von mehreren Blenden (30), deren Öffnungsdurchmesser die maximale Durchflussmenge bestimmt.

## Claims

1. A modularly structured unit (10) made up of a flow resistance element (20) which is built up of a multitude of parallel ducts (40), and an orifice plate (30) adjacent thereto for use in the main flow duct of a thermal mass flow rate measuring or control device, the flow resistance element (20) being adapted to be combined with various orifice plates (30) that differ in their opening diameters, **characterized in that** the orifice plate (30) is arranged immediately upstream or downstream of the flow resistance element (20) in the flow direction and is adjacent to the flow resistance element (20), the orifice plate (30) being in the shape of a disk which has an opening (50), and the disk covering a certain number of the parallel ducts (40) and exposing a certain number of the parallel ducts (40).

2. The modularly structured unit (10) according to claim 1, wherein the flow resistance element (20) includes parallel and adjacent ducts (40) that are defined by walls (60) having wall thicknesses of from 0.5 mm to 0.05 mm.

3. The modularly structured unit (10) according to claim 1 and 2, wherein the flow resistance element (20) is produced by photopolymerization from a plastic material by growing in layers over an appropriate mask.

4. The modularly structured unit (10) according to claim 3, wherein the flow resistance element (20) includes ducts (40) having a preferably approximately trapezoidal cross-section.

5. The modularly structured unit (10) according to any of the preceding claims, wherein one single flow resistance element (20) having a large opening cross-section cooperates with a respective one of a plurality of orifice plates (30) having an opening diameter determining the maximum rate of flow.

## Revendications

1. Unité (10) à structure modulaire composée d'un élément de résistance à l'écoulement (20) constitué d'une pluralité de canaux parallèles (40), et d'un obturateur (30) adjacent à celui-ci pour l'utilisation dans le canal d'écoulement principal d'un débitmètre massique ou d'un dispositif de réglage thermique, l'élément de résistance à l'écoulement (20) étant apte à être combiné avec différents obturateurs (30) qui se distinguent par leur diamètre d'ouverture, **caractérisé en ce que** l'obturateur (30) est agencé directement devant ou derrière l'élément de résistance à l'écoulement (20) dans le sens d'écoulement et est adjacent à l'élément de résistance à l'écoulement (20), l'obturateur (30) étant réalisé sous forme de plaque qui présente un orifice (50), et la plaque recouvrant un certain nombre des canaux parallèles (40) et libérant un certain nombre des canaux parallèles (40).

2. Unité (10) à structure modulaire selon la revendication 1, l'élément de résistance à l'écoulement (20) présentant des canaux (40) parallèles et adjacents les uns aux autres lesquels sont délimités par des parois (60) dont l'épaisseur de paroi est comprise entre 0,5 mm et 0,05 mm.

3. Unité (10) à structure modulaire selon les revendications 1 et 2, l'élément de résistance à l'écoulement (20) étant fabriqué par photopolymérisation à partir d'une matière plastique par une croissance par couches au-dessus d'un masque approprié.

4. Unité (10) à structure modulaire selon la revendication 3, l'élément de résistance à l'écoulement (20) présentant des canaux (40) dont la section transversale est de préférence approximativement trapézoïdale.

5. Unité (10) à structure modulaire selon l'une des revendications précédentes, un seul élément de résistance à l'écoulement (20) à grande section d'ouverture coopérant respectivement avec l'un parmi plusieurs obturateurs (30) dont le diamètre d'ouverture détermine le débit maximal.
